# EUROPEAN PATENT APPLICATION

(11) **EP 1 561 966 A2**
(43) Date of publication of application: **10.08.2005**
(21) Application number: 05250666.4
(22) Date of filing: 05.02.2005
(51) Int. Cl.: F16G 15/00

(54) **Connector**

(30) Priority: 07.02.2004 GB 0402722
(71) Applicant: Thomson, George, Fraserburgh, Aberdeenshire AB43 9NP (GB)
(72) Inventor: Thomson, George, Fraserburgh, Aberdeenshire AB43 9NP (GB)
(74) Representative: Watson, Craig Simon

(57) **Abstract**

A connector (100) is described particularly for use to secure two lengths of chain together. Preferred embodiments of the connector have two parts (110, 120) each receiving respective chain links. The parts can snap together to maintain a connection and have abutment portions (113, 123) which abut with each other to provide a firm connection. There is no need to add bolts or the like to the connector to form or maintain the connection. Thus a reliable connection is achieved.

## Description

This invention relates to a connector for connecting two parts together, particularly but not exclusively for connecting links of chain together.

The use of chains is well known in all types of industry and in practice it is often required to connect two separate chains together by connecting the links on the end of each chain.

U-shaped hooks (not shown) can be welded together to form a chain link around the links of the end of the two pieces of chain in order to make a larger piece of chain. However, this requires specialist equipment which is expensive and frequently unavailable when the two pieces of chain are required to be connected.

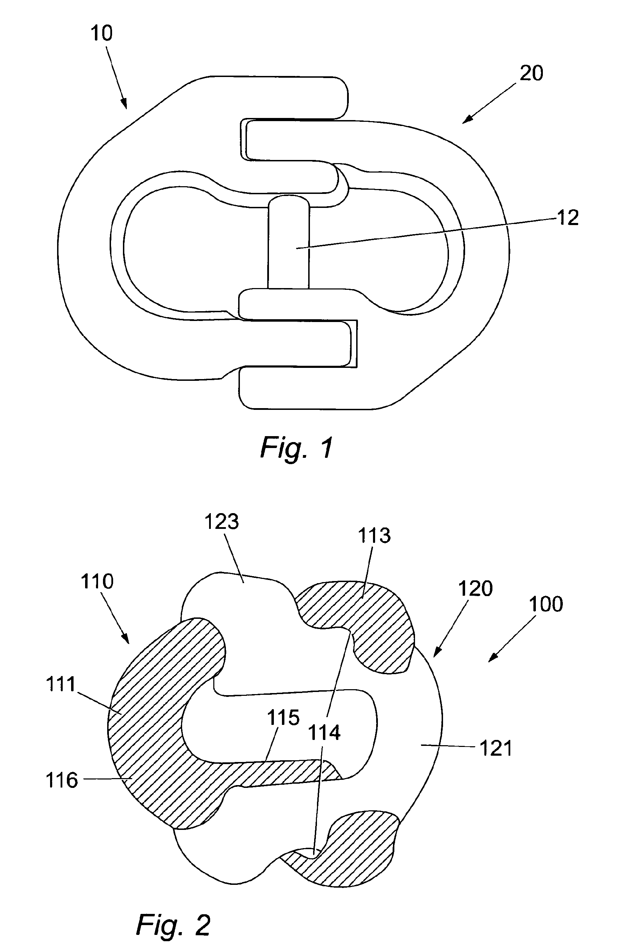

Fig. 1 shows an alternative, conventional chain connector comprising two U-shaped hooks 10, 20 each adapted to receive a chain link (not shown) in each of the U-shaped hooks 10, 20. A pin 12 engages apertures in the U-shaped hooks 10, 20 in order to connect them together.

However, a problem with such a conventional design is that the pins 12 can fall out during use resulting in failure of the connector, disengagement of the pieces of chain and potentially serious consequences should the chain be in use and supporting a structure of any sort when the connector fails.

According to the present invention, there is provided a connector comprising:
a first part shaped to receive a first member;
a second part shaped to receive a second member;
wherein the first and second parts each have an abutment portion shaped to abut against the other abutment portion of the first and second parts in order to form a connection between the first and second parts.

Typically the first member and second member are chain links. Preferably therefore the first and second parts are shaped to receive first and second chain links respectively.

Typically the first chain link has a chain extending thereform and the second chain link has a chain extending thereform.

Preferably, the abutment portions are adapted to abut against each other to resist movement of the first and second parts in the direction of pull of the chain.

Preferably, at least one of the first and second parts comprises alignment means adapted to align the other of the first and second parts therewith whilst forming a connection.

The alignment means may be a portion of material extending from the abutment portion which defines a slot through which the other of the first and second parts can engage.

Preferably, the portion of the first part shaped to receive a first chain link comprises a retention means in order to maintain the connection between the first and second parts.

Preferably, the first part is resilient so that it is adapted to extend around the retention means when forced to do so by a user.

Preferably, the first part is adapted to form a snap fit with the second part and more preferably the second part forms a snap fit with the first part.

The retention means may be a nib extending outwards from the said portion of the first part.

Preferably, the second part also comprises such a retention means.

Preferably, the portion of the first part which is shaped to receive a first member comprises a U-shaped hook. Typically, the portion of the second part which is shaped to receive the second member also comprises a U-shaped hook.

Optionally, the first and/or second parts are horse-shoe shaped. Thus the retention means may be a relatively wide portion of the first or second parts.

Preferably, the portion of the first and/or second part which is shaped to receive the first and/or second member has a curved cross-section. More preferably, it has an elliptical cross-section although a circular cross-section may be provided for certain embodiments.

Preferably, the cross-section of the second part which is shaped to receive the second member also has a curved cross-section. Preferably, but not necessarily, this part is also elliptical.

Preferably, the diameter of the cross-section of the first and second parts is greater in the direction of pull of the chain when the chain is in a linear alignment with the connector than the diameter perpendicular to said pull of chain in said alignment.

Typically the first and second parts are integrally formed with their respective abutment portions.

Preferably, features of the first part are provided in the second part. More preferably, the first and second parts are substantially identical.
An embodiment of the present invention will now be described by way of example only, with reference to the accompanying drawings, in which:-
Fig. 1 is a top view of a conventional chain connector;
Fig. 2 is a top view of a connector in accordance with the present invention;
Fig. 3 connector is a perspective view of a first half of the Fig. 2 connector; and
Fig. 4 is a perspective view of the Fig. 2 connector.

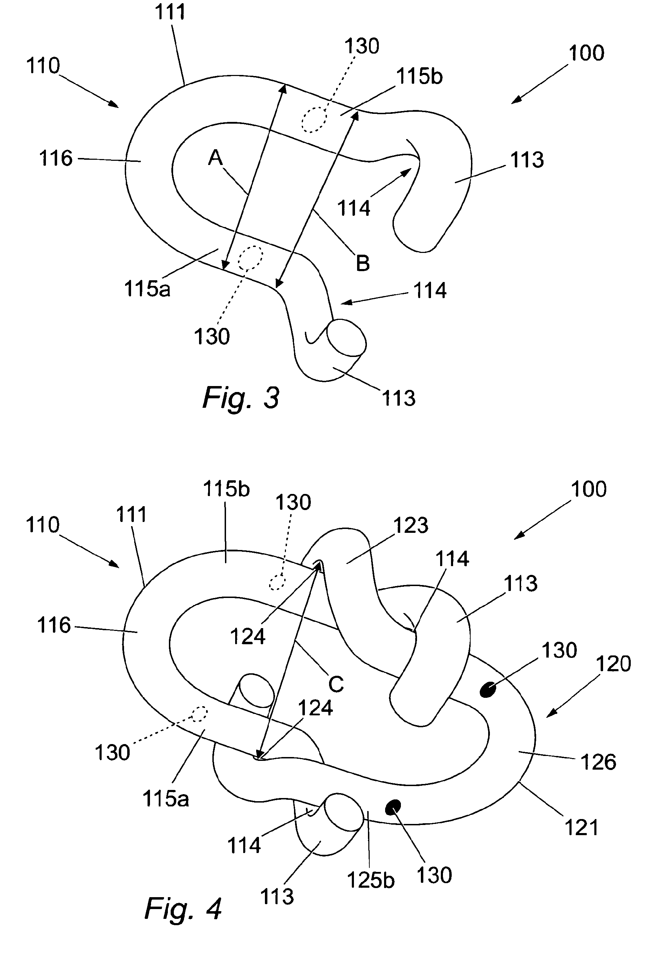

A connector 100 in accordance with the present invention is shown in Figs. 2-4 and comprises a first connector half 110 and a connector second half 120. The halves 110, 120 of the connector 100 are identical and adapted to fit together, as shown in Figs. 2 and 4, and described herein below. Each half 110, 120 will be described by reference to the first half 110.

The first half 110 of the connector 100 comprises a U-shaped hook 111, lugs 113 and alignment slots 114.

The U-shaped hook 111 comprises two legs 115a & 115b. An arc-shaped portion 116 connects the two legs 115a & 115b together in order to form the U-shape of the U-shaped hook 111.

The legs 115a & 115b are generally straight and parallel to each other although may be slightly curved as described below, in order to aid retention of the connection between the halves 110, 120 in use.

At the other end of each of the legs 115a & 115b, lugs 113 project outwardly away from the other leg 115b, 115a. The lugs 113 curl around and then extend out of the plane defined by the U-shaped hook 111. Lastly the lugs 113 curl around again and extend back towards each other.
This shape of the lugs 113 defines slots 114 for engagement with legs 125a & 125b of the other U-shaped hook 121.

Nibs 130 are provided on the legs 115a & 115b and extend outwardly therefrom. Movement of the lugs 123 or legs 125a & 125b of the other connector half 120 thereover is thereby resisted. In this way, the connector halves 110, 120 do not come apart in use but can be pushed or 'snapped' together over the nibs 130 to connect.

Similarly the U-shaped hook 111 can be very subtly, almost imperceptibly, horse-shoe shaped. That is, the distance 'A' between outer sides of mid-sections of the legs 115a & 115b can be slightly longer than the distance 'B' between the outer sides of the end of the legs 115a & 115b (next to the lugs 113). Therefore during connection and disconnection the lugs 123 defining the slots 124 of the other connector half 120 are snapped over this relatively large mid-section A to rest around the said ends of the legs 115a & 115b between the lugs 113 and the relatively large mid-section A. The relatively large mid-section A resists movement of the connector half 110 through the slots 124 which could result in inadvertent disconnection of the halves 110, 120.

The lugs 113 at the end of the legs 115a, 115b are therefore resilient enough to be snapped over the mid-section A or nibs 130.

The cross-section of the U-shaped hook 111 is preferably oval or elliptical with the greater cross-sectional diameter being in the direction of pull that the connector 100 will experience when the attached chain is in linear alignment with the connector 100, that is generally parallel with the legs 115a & 115b.

Certain embodiments of the present invention benefit from the feature that they have an oval-shaped cross-section so that there is no point to point contact between the chain link they are connecting to and the U-shaped hook. This makes the connector more robust and less liable to wear and tear in addition to other advantages.

As described above, in preferred embodiments the connector halves 110, 120 are identical to each other and so the features described above with respect to the first connector half 110 are also present in the second connector half 120 and vice versa.

Thus, to connect a first and second chain together a first link (not shown) from the end of the first chain (not shown) is placed within the U-shaped hook 111 and a second link (not shown) from the second chain (not shown) is placed in the U-shaped hook 121. The connector halves 110, 120 are oriented so that their main planes are parallel to each other, their lugs 113, 123 extend outwards from said planes towards each other and their arc-shaped portions 116, 126 are next to the lugs 123, 113 of the opposite connector half 120, 110.

The arc-shaped portions 116, 126 of the connector halves 110, 120 are directed past the slots 124, 114 of the other connector half 120, 110 and the legs 115a & 115b, 125a & 125b of each connector half 110, 120 engages with the slots 124, 114 of the other connector half 120, 110. The connector halves 110, 120 are snapped over the nibs 130 (or the relatively wide mid-section 'A' of the legs 125a & 125b, 115a & 115b) of the other connector half 120, 110 and continue moving until their lugs 113, 123 on each side of their respective legs 115a & 115b, 125a & 125b abut with each other and prevent further movement. Thus, a connection between the first and second chain is achieved.

The connection is maintained during use by the nibs 130 or relatively wide mid-section 'A', providing a barrier to the parts disconnecting.

Thus, embodiments of the present invention benefit from the fact that there are no pins or bolts to be inserted between the two parts of the connector thus making them far more reliable than certain previous connectors.

An advantage of certain other embodiments of the invention is the ease in which the connection may be made and removed.

The connector 100 is preferably manufactured when using the technique of drop forging. It is certified to British Standards BS5950 and preferably to chain grade 80. Thus certain embodiments of the invention benefit from the fact that they can be used for heavy loads in the lifting industry.

The cross-section of the U-shaped hooks 111, 121 is preferably slightly larger than that of the chain which they are joining. For example, the thickness of the U-shaped hook 111 around the arc-shaped portions 116 and legs 115a & 115b may be 10mm whereas the chain pieces they are joining may be 7mm.

The material used is 80 ton tensile steel (EN24) which is a high grade chromium/molybdenum steel which is hardened and tempered.

Improvements and modifications may be made without departing from the scope of the invention.

## Claims

1. A connector (100) comprising:
a first part (110) shaped to receive a first member;
a second part (120) shaped to receive a second member;
wherein the first and second parts (110, 120) each have an abutment portion (113, 123) shaped to abut against the other abutment portion (113, 123) of the first and second parts (110, 120) in order to form a connection between the first and second parts (110, 120).

2. A connector (100) as claimed in claim 1, wherein the first and second members are chain links and the first and second parts (110, 120) are shaped to receive the first and second chain links respectively.

3. A connector (100) as claimed in either preceding claim, wherein at least one of the first and second parts (110, 120) comprises alignment means (113) shaped to align the other of the first and second parts (110, 120) therewith whilst forming a connection.

4. A connector (100) as claimed in claim 3, wherein the alignment means (113) is a portion of the first or second parts (110, 120) which defines a slot (114) through which the other of the first and second parts (110, 120) is shaped to engage.

5. A connector (100) as claimed in any preceding claim, wherein at least one of the first and second parts (110, 120) comprises a retention means (130, A) adapted to maintain a connection between the first and second parts (110, 120).

6. A connector (100) as claimed in claim 5, wherein the retention means (130) comprises a nib (130) extending outwards from the at least one of the first and second parts (110, 120).

7. A connector (100) as claimed in claim 5 or claim 6, wherein at least one of the first and second parts (110, 120) is resilient and adapted to extend around the retention means (130, A) when forced by a user, but adapted to be retained by the retention means (130, A) during use.

8. A connector (100) as claimed in any one of claims 5 to 7, wherein the first and second parts (110, 120) are adapted to form a snap-fit connection with each other.

9. A connector (100) as claimed in any preceding claim, wherein the first and second parts (110, 120) each comprise a horse-shoe shaped hook (115a, 115b, 116, 125a, 125b, 126).

10. A connector (100) as claimed in any one of claims 1 to 8, wherein the first and second parts (110, 120) each comprise a U-shaped hook.

11. A connector (100) as claimed in any preceding claim, wherein the first part (110) has a curved cross-section.

12. A connector (100) as claimed in claim 11, wherein the first part (110) has an elliptical cross-section.

13. A connector (100) as claimed in any preceding claim, wherein the diameter of the cross-section of the first part (110) is greater in the direction of pull of the first member, when the first member is in a linear alignment with the connector (100), than the diameter perpendicular to said pull of the first member in said alignment.

14. A connector (100) as claimed in any preceding claim, wherein the first and second parts (110, 120) are substantially identical.
